# EUROPEAN PATENT SPECIFICATION

(11) **EP 3 857 055 B1**
(45) Date of publication and mention of the grant of the patent: **03.09.2025**
(21) Application number: 19783922.8
(22) Date of filing: 26.09.2019
(51) Int. Cl.: F03D 13/10, E04H 12/12, F03D 13/20, B33Y 10/00

(54) **METHOD FOR MANUFACTURING WIND TURBINE TOWER STRUCTURE WITH EMBEDDED REINFORCEMENT SENSING ELEMENTS**
VERFAHREN ZUR HERSTELLUNG EINER WINDTURBINENTURMSTRUKTUR MIT EINGEBETTETEN VERSTÄRKUNGSSENSORELEMENTEN
PROCÉDÉ DE FABRICATION D'UNE STRUCTURE DE TOUR D'ÉOLIENNE AVEC ÉLÉMENTS DE DÉTECTION DE RENFORCEMENT INCORPORÉS

(30) Priority: 28.09.2018 IN 201841036829
(43) Date of publication of application: 04.08.2021
(73) Proprietor: General Electric Renovables España, S.L., 08005 Barcelona (ES)
(72) Inventor: TURNQUIST, Norman Arnold, Niskayuna, New York 12309 (US); ERNO, Daniel Jason, Niskayuna, New York 12309 (US); TOBIN, James Robert, Greenville, South Carolina 29615 (US); RAMADURAI, Krishna, Hoodi Village Bangalore 560066 (IN); COOPER, Gregory Edward, Schenectady, New York 12345 (US); ANANDAN, Krishna Prashanth, Chennai 600092 (IN); MEYER, Pascal, Niskayuna, New York 12309 (US); FANG, Biao, Niskayuna, New York 12309 (US); DAVIS, John P., Niskayuna, New York 12309 (US)
(74) Representative: Zimmermann & Partner Patentanwälte mbB
(86) International application number: PCT/US2019/053079
(87) International publication number: WO 2020/069070

(56) References cited:
- EP-A1- 2 942 453
- EP-A1- 3 118 394
- US-A1- 2010 140 940
- US-A1- 2012 205 133
- US-A1- 2016 318 208

## Description

### RELATED APPLICATIONS

This application claims priority to Indian Patent Application 201841036829 filed on September 28, 2018.

### FIELD

The present disclosure relates in general to wind turbine towers, and more particularly to methods of manufacturing wind turbine tower structures with embedded reinforcement sensing elements.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The wind turbine tower is generally constructed of steel tubes, prefabricated concrete sections, or combinations thereof. Further, the tubes and/or concrete sections are typically formed off-site, shipped on-site, and then arranged together to erect the tower. For example, one manufacturing method includes forming pre-cast concrete rings, shipping the rings to the site, arranging the rings atop one another, and then securing the rings together. As wind turbines continue to grow in size, however, conventional manufacturing methods are limited by transportation regulations that prohibit shipping of tower sections having a diameter greater than about 4 to 5 meters. Thus, certain tower manufacturing methods include forming a plurality of arc segments and securing the segments together on site to form the diameter of the tower, e.g. via bolting. Such methods, however, require extensive labor and can be time-consuming. Document EP 3 118 394 A1 describes a method for fabricating a tower by 3D printing; document US 2012/205133A1 describes providing a lightning protection system in the tower of a wind turbine; and EP 2 942 453 A1 describes a wind turbine tower with reinforcement fibers and a fabrication method for the wind turbine tower.

In view of the foregoing, the art is continually seeking improved methods for manufacturing wind turbine towers. Accordingly, the present disclosure is directed to methods for manufacturing wind turbine tower structures that address the aforementioned issues. In particular, the present disclosure is directed to methods for manufacturing wind turbine tower structures with embedded reinforcement sensing elements.

### BRIEF DESCRIPTION

Aspects and advantages of the invention will be set forth in part in the following description, or may be obvious from the description, or may be learned through practice of the invention.

The present disclosure is directed to a method for manufacturing a tower structure of a wind turbine according to claim 1. The method includes printing, via an additive printing device, the tower structure of the wind turbine of a cementitious material. During printing, the method includes embedding one or more reinforcement sensing elements at least partially within the cementitious material at one or more locations. Thus, the reinforcement sensing element(s) are configured for sensing structural health of the tower structure and/or sensing temperature of the cementitious material. In addition, the method includes curing the cementitious material so as to form the tower structure.

According to the invention, the method includes providing one or more molds of the tower structure on a foundation of the wind turbine. The method includes printing, via the additive printing device, the tower structure of the wind turbine within the one or more molds, the one or more molds may be made of a polymer material. In several embodiments, the method may further include providing an adhesive material between at least one of the cementitious material and the foundation, the cementitious material and the one or more reinforcement sensing element, and/or multiple layers of the cementitious material and/or the polymer material.

In further embodiments, the method may include printing, via the additive printing device, the one or more molds of the tower structure. In addition, the method includes printing, via the additive printing device, one or more sensors through the one or more molds of the tower structure and through the cementitious material. In such embodiments, the method may also include monitoring, via the sensor(s), the printing and/or curing of the cementitious material.

In additional embodiments, the method may include controlling a cure rate of the curing of the cementitious material via the reinforcement sensing element(s). In another embodiment, the method may include monitoring, via the reinforcement sensing element(s), a structural health of the tower structure in response to wind loads.

In several embodiments, the step of embedding the reinforcement sensing element(s) at least partially within the cementitious material at one or more locations may include printing, via the additive printing device, the reinforcement sensing element(s) within the cementitious material at one or more locations during printing of the tower structure.

In particular embodiments, the reinforcement sensing element(s) may include strain gauges, temperatures sensors, elongated cables or wires, helical cables or wires, reinforcing bars (hollow or solid), temperatures sensors, reinforcing fibers (e.g. metallic, polymeric, glass fiber, or carbon fiber), reinforcing metallic rings (circular, oval, spiral and others as may be relevant) or couplings, mesh, and/or any such structures as may be known in the art to reinforce concrete structures. Thus, in one embodiment, the method may include unwinding one or more pre-tensioned cables into the cementitious material during printing of the tower structure and/or tensioning, via the additive printing device, the cable(s) during printing of the tower structure. In such embodiments, the method may also include varying a tension of the one or more cables as a function of a cross-section of the tower structure during printing of the tower structure.

In further embodiments, the method may include printing a plurality of reinforcement sensing elements at different locations in the tower structure. Thus, in certain embodiments, the method may also include printing one or more channels for routing one or more signal transfer lines of the reinforcement sensing element(s) to a controller. In additional embodiments, the method may include generating, via the controller, a digital twin of the tower structure based on data collected by the one or more reinforcement sensing elements.

In further embodiments, on a foundation of the wind turbine, the method includes providing one or more molds of the tower structure. The method also includes filling the one or more molds with a cementitious material. During filling, the method includes embedding one or more reinforcement sensing elements at least partially within the cementitious material at one or more locations. As such, the reinforcement sensing element(s) are configured for sensing structural health of the tower structure, sensing temperature of the cementitious material, heating to control cure time of the cementitious material, and/or reinforcing the cementitious material. In addition, the method includes curing the cementitious material within the one or more molds so as to form the tower structure. It should be understood that the method may further include any of the additional features and/or steps as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a cross-sectional view of one embodiment of a tower structure of a wind turbine according to the present disclosure;
FIG. 3 illustrates a perspective view of one embodiment of a tower structure of a wind turbine according to the present disclosure;
FIG. 4 illustrates a flow diagram of one embodiment of a method for manufacturing a tower structure of a wind turbine at a wind turbine site according to the present disclosure;
FIG. 5 illustrates a schematic diagram of one embodiment of an additive printing device configured for printing a tower structure of a wind turbine according to the present disclosure;
FIG. 6 illustrates a cross-sectional view of one embodiment of a tower structure of a wind turbine during the manufacturing process according to the present disclosure; and
FIG. 7 illustrates a block diagram of one embodiment of a controller of an additive printing device according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to methods for manufacturing wind turbine towers using automated deposition of cementitious materials via technologies such as additive manufacturing, 3-D Printing, spray deposition, extrusion additive manufacturing, concrete printing, automated fiber deposition, as well as other techniques that utilize computer numeric control and multiple degrees of freedom to deposit material. More specifically, methods of the present disclosure include printing and/or embedding reinforcement sensing elements in concrete wind turbine towers formed using additive manufacturing, which can provide adequate structural characteristics for additive tower technology and/or sensing capabilities during the printing process. The present disclosure may also include printing sensing elements in the molds for the wind turbine towers. In such embodiments, for example, strain gauges can be embedded in the fused deposition modeling (FDM) printed molds, which can be subsequently assembled on site to pour a cementitious material, such as concrete. In further embodiments, multiple reinforcement sensing elements can be printed at different locations on the tower structure and/or the molds as well as the channels for the signal transfer lines. Still other features of the present disclosure may include discrete embedded sensors in the tower structure, helical cables embedded in the tower structure for sensing structural health of the tower structure, sensing temperature of the cementitious material, and/or for resistance heating to control the cure time, monitoring the printing process and providing process heating as required, and/or using coiled wires that can also provide structural support to the tower structure.

Thus, the methods described herein provide many advantages not present in the prior art. For example, the embedded sensing elements of the present disclosure are configured to provide information on the tower structural health. Further, using helical cables can serve as sensing elements and also for heating the cementitious material as the tower structure is being built, thereby enabling faster curing thereof. In addition, the sensing elements are configured to provide information on strength parameters as the tower structure is being built such that appropriate modifications can be employed during the manufacturing process, as well as the opportunity to monitor for cracks. Moreover, the reinforcement sensing elements can add integral structural reinforcement to the tower structure. It should be understood, however, that the reinforcement sensing elements are not required to provide sensing capabilities and structural reinforcement in every embodiment. Rather, in some embodiments, the reinforcement sensing elements may only provide structural reinforcement. In other embodiments, the reinforcement sensing elements may only provide sensing capabilities, however, it is important to realize that any feature added to or embedded into the tower structure 12 may provide at least some minimal level of reinforcement. Further, in certain embodiments, where cables are used, the reinforcement sensing elements can provide continuous reinforcement to the tower structure, thereby eliminating discontinuities.

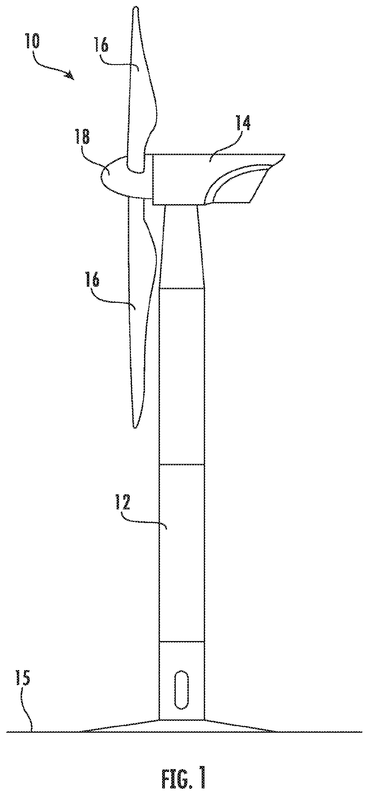

Referring now to the drawings, FIG. 1 illustrates one embodiment of a wind turbine 10 according to the present disclosure. As shown, the wind turbine 10 includes a tower 12 extending from a foundation 15 or support surface with a nacelle 14 mounted atop the tower 12. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbine towers, but may be utilized in any application having concrete constructions and/or tall towers in addition to wind towers, including for example homes, bridges, tall towers and other aspects of the concrete industry. Further, the methods described herein may also apply to manufacturing any similar structure that benefits from the advantages described herein.

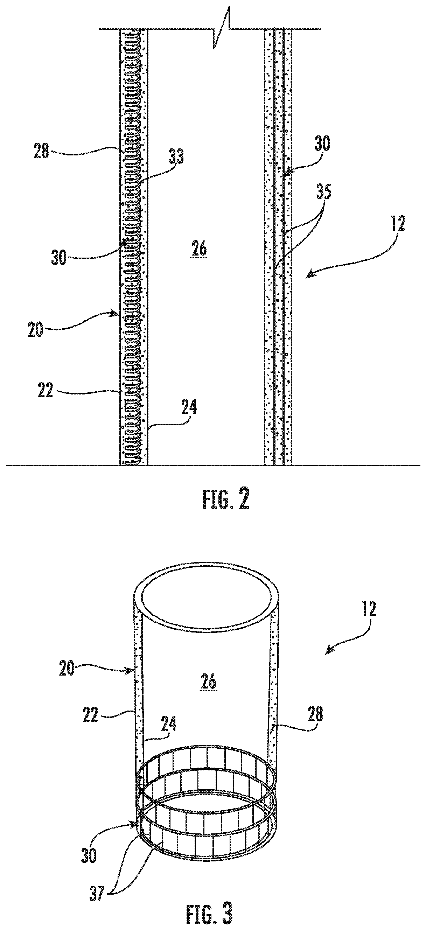

Referring now to FIGS. 2-3, various views of a tower structure 12 of a wind turbine 10 according to the present disclosure are illustrated. FIG. 2 illustrates a partial, cross-sectional view of one embodiment of the tower structure 12 of the wind turbine 10 according to the present disclosure. FIG. 3 illustrates a perspective view of another embodiment of the tower structure 12 of the wind turbine 10 according to the present disclosure. As shown, the illustrated tower 12 defines a circumferential tower wall 20 having an outer surface 22 and an inner surface 24. Further, as shown, the circumferential tower wall 20 generally defines a hollow interior 26 that is commonly used to house various turbine components (e.g. a power converter, transformer, etc.). In addition, as will be described in more detail below, the tower structure 12 is formed using additive manufacturing.

Moreover, as shown, the tower structure 12 is formed of a cementitious material 28 that is reinforced with one or more reinforcement sensing elements 30. In particular embodiments, the reinforcement sensing element(s) 30 may include, for example, strain gauges, temperatures sensors, elongated cables or wires, helical cables or wires, reinforcing bars (also referred to as rebar), (hollow or solid), temperatures sensors, reinforcing fibers (e.g. metallic, polymeric, glass fiber, or carbon fiber), reinforcing metallic rings (circular, oval, spiral and others as may be relevant) or couplings, mesh, and/or any such structures as may be known in the art to reinforce concrete structures.

For example, as shown in FIG. 2, the tower structure 12 may include a helical cable 33 and/or a plurality of pre-tensioned linear cables 35 embedded in the cementitious material 28. In another embodiment, where the reinforcement sensing element(s) 30 include reinforcing fibers, continuous fibers or a plurality of fibers may be used to monitor the tower structure 12, e.g. using one or more ohm meters. Such a technique may also be used locally, i.e. to monitor specific selected areas of the tower structure 12 (e.g. that are subject to high stress). In yet another embodiment, where the reinforcement sensing element(s) 30 include reinforcing cables, a high-frequency vibratory response of the cable (or tension of the cable) may be monitored during operation of the wind turbine 10 to first establish a signature. Then, the signature may be continuously monitored (e.g. via one or more strain gauges attached to the cables) to identify changes above a certain threshold (e.g. as defined by limits and/or definitions) based on, for example, a coded algorithm. In another embodiment, rather than using strain gauges, the cable may be adequate sensing capabilities that can generate the signature.

In addition, the reinforcement sensing element(s) 30 as described herein may be electrically heated via any suitable external heater or heating source or may include a resistive heating element configured to heat up as current passes therethrough. As such, the helical cables 33 are configured to provide sensing capabilities as well as heating of the cementitious material 28 as the tower structure 12 is being built so as to decrease the cure time of the material 28. In another embodiment, as shown in FIG. 3, the tower structure 12 may include, for example, a plurality of reinforcing bars that form a metal mesh 37 arranged in a cylindrical configuration to correspond to the shape of the tower 12. Further, as shown, the cylindrical metal mesh 37 can be embedded into the cementitious material 28 of the tower structure 12 before the material 28 cures and periodically along the height of the tower 12.

In addition, the cementitious material 28 described herein may include any suitable workable paste that is configured to bind together after curing to form a structure. As examples, a cementitious material may include lime or calcium silicate based hydraulically setting materials such as Portland cement, fly ash, blast furnace slag, pozzolan, limestone fines, gypsum, or silica fume, as well as combinations of these. In some embodiments, the cementitious material 28 may additionally or alternatively include non-hydraulic setting material, such as slaked lime and/or other materials that harden through carbonation. Cementitious materials may be combined with fine aggregate (e.g., sand) to form mortar, or with rough aggregate (sand and gravel) to form concrete. A cementitious material may be provided in the form of a slurry, which may be formed by combining any one or more cementitious materials with water, as well as other known additives, including accelerators, retarders, extenders, weighting agents, dispersants, fluid-loss control agents, lost-circulation agents, strength-retrogression prevention agents, free-water/free-fluid control agents, expansion agents, plasticizers (e.g., superplasticizers such as polycarboxylate superplasticizer or polynaphthalene sulfonate superplasticizer), and so forth. The relative amounts of respective materials to be provided in a cementitious material may be varied in any manner to obtain a desired effect.

Referring now to FIGS. 3-7, the present disclosure is directed to methods for manufacturing wind turbine towers via additive manufacturing. Additive manufacturing, as used herein, is generally understood to encompass processes used to synthesize three-dimensional objects in which successive layers of material are formed under computer control to create the objects. As such, objects of almost any size and/or shape can be produced from digital model data. It should further be understood that the additive manufacturing methods of the present disclosure may encompass three degrees of freedom, as well as more than three degrees of freedom such that the printing techniques are not limited to printing stacked two-dimensional layers, but are also capable of printing curved and/or irregular shapes.

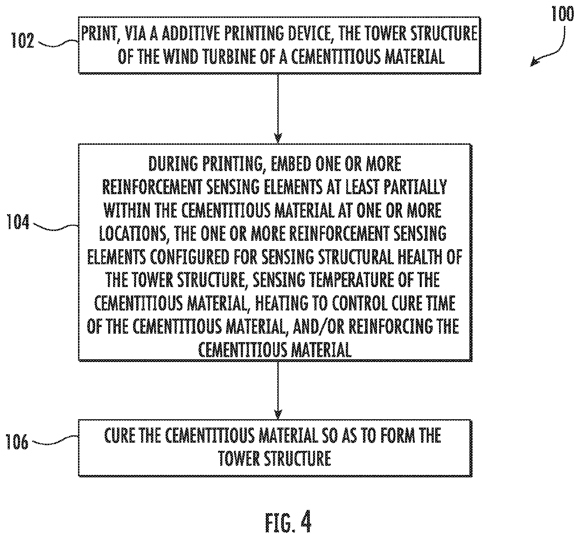

Referring particularly to FIG. 4, a flow diagram of one embodiment of a method 100 for manufacturing a tower structure of a wind turbine at a wind turbine site. In general, the method 100 will be described herein with reference to the wind turbine 10 and the tower structure 12 shown in FIGS. 1-3. However, it should be appreciated that the disclosed method 100 may be implemented with tower structures having any other suitable configurations. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

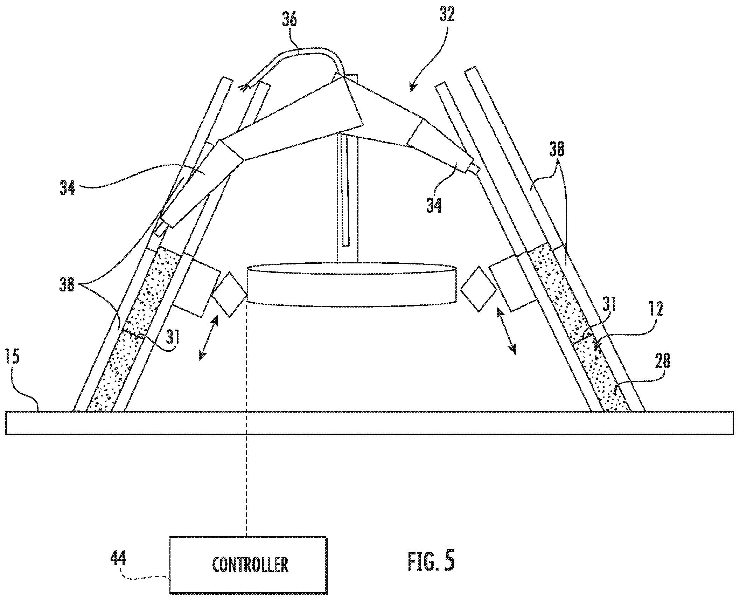

As shown at (102), the method 100 may include printing, via an additive printing device 32, the tower structure 12 of the wind turbine 10 of the cementitious material 28. For example, as shown in FIG. 5, a schematic diagram of one embodiment of the additive printing device 32 according to the present disclosure is illustrated. It should be understood that the additive printing device 32 described herein generally refers to any suitable additive printing device having one or more nozzles for depositing material (such as the cementitious material 28) onto a surface that is automatically controlled by a controller to form an object programmed within the computer (such as a CAD file). More specifically, as shown, the additive printing device 32 may include one or more nozzles 34 for depositing various materials. For example, as shown in the illustrated embodiment, the additive printing device 32 includes two nozzles 34. In further embodiments, the additive printing device 32 may include any suitable number of nozzles 34. In addition, the additive printing device 32 may include an injector 36, which is discussed in more detail below.

Still referring to FIG. 5, the method 100 may include providing one or more molds 38 of the tower structure 12, e.g. on the foundation 15 of the wind turbine 10. It should be understood that the molds 38 described herein may be solid, porous, and/or printed with openings to inject the cementitious material 28. In addition, in one embodiment, the mold(s) 38 may be prefabricated and delivered to the wind turbine site. In alternative embodiments, as shown in FIG. 5, the additive printing device 32 may also be configured to print the mold(s) 38 of the tower structure 12. For example, as shown, one of the nozzles 34 may be configured to dispense a polymer material for building up the mold(s) 38 on the foundation 15 of the wind turbine 10 (or any other suitable on-site location). Suitable polymer materials may include, for example, a thermoset material, a thermoplastic material, a biodegradable polymer (such as a corn-based polymer system, fungal-like additive material, or an algae-based polymer system) that is configured to degrade/dissolve over time, or combinations thereof. As such, in one embodiment, the outer polymer mold may be biodegradable over time, whereas the inner polymer mold remains intact. In alternative embodiments, the outer and inner molds may be constructed of the same material.

In such embodiments, as shown, the additive printing device 32 may be configured to fill the mold(s) 38 of the tower structure 12 with the cementitious material 28. More specifically, as shown, one or more of the nozzles 34 may be configured to print the cementitious material 28 into the molds 38. In alternative embodiments, rather than printing the cementitious material 28, the injector 36 of the additive printing device 32 may simply inject or fill the mold(s) 38 with the cementitious material 28, e.g. by injecting the cementitious material 28 from the top of the molds 38 or by injecting the cementitious material 28 through openings in the mold.

In addition, the additive printing device 32 is configured to print the cementitious material 28 in a manner that accounts for the cure rate thereof such that the tower structure 12, as it is being formed, can bond to itself. In addition, the additive printing device 32 is configured to print the tower structure 12 in a manner such that it can withstand the weight of the wall 20 as the additively-formed cementitious material 28 can be weak during printing. Further, the reinforcement sensing element(s) 30 of the tower structure 12 are provided to enable the tower to withstand wind loads that can cause the tower 12 to be susceptible to cracking.

In additional embodiments, an adhesive material 31 (e.g. FIG. 5) may also be provided between one or more of the cementitious material 28 and the foundation 15, the cementitious material 28 and the reinforcement sensing element(s) 30, and/or multiple layers of the cementitious material 28 and/or the polymer material. Thus, the adhesive material 31 may further supplement interlayer bonding between materials.

The adhesive material 31 described herein may include, for example, cementitious material such as mortar, polymeric materials, and/or admixtures of cementitious material and polymeric material. Adhesive formulations that include cementitious material are referred to herein as "cementitious mortar." Cementitious mortar may include any cementitious material, which may be combined with fine aggregate. Cementitious mortar made using Portland cement and fine aggregate is sometimes referred to as "Portland cement mortar," or "OPC". Adhesive formulations that include an admixture of cementitious material and polymeric material are referred to herein as "polymeric mortar." Any cementitious material may be included in an admixture with a polymeric material, and optionally, fine aggregate. Adhesive formulations that include a polymeric material are referred to herein as "polymeric adhesive."

Exemplary polymeric materials that may be utilized in an adhesive formulation include may include any thermoplastic or thermosetting polymeric material, such as acrylic resins, polyepoxides, vinyl polymers (e.g., polyvinyl acetate (PVA), ethylene-vinyl acetate (EVA)), styrenes (e.g., styrene butadine), as well as copolymers or terpolymers thereof. Characteristics of exemplary polymeric materials are described in ASTM C1059 / C1059M-13, Standard Specification for Latex Agents for Bonding Fresh To Hardened Concrete.

Referring back to FIG. 4, as shown at (104), the method 100 may also include embedding the reinforcement sensing element(s) 30 at least partially within the cementitious material 28 at different locations within the tower structure 12 (i.e. while simultaneously printing the cementitious material 28). Accordingly, as will be discussed herein, the reinforcement sensing element(s) 30 are configured for sensing structural health of the tower structure, sensing temperature of the cementitious material, heating to control cure time of the cementitious material 28, and/or reinforcing the cementitious material 28. As shown at (106), the method 100 may include curing the cementitious material 28 so as to form the tower structure 12.

More specifically, in several embodiments, the reinforcement sensing element(s) 30 may be embedded within the cementitious material 28 by printing the reinforcement sensing element(s) 30 within the cementitious material 28 via the additive printing device 32. For example, as the tower structure 12 is being built up, the additive printing device 32 can alternate between printing the cementitious material 28 and the reinforcement or sensor material. Thus, the reinforcement sensing element(s) 30 are configured to provide information relating to strength parameters and other structural health parameters as the tower 12 is being built such that appropriate modifications can be employed. In addition, the reinforcement sensing element(s) 30 provide real-time monitoring to support diagnostics, thereby reducing inspection/servicing costs of the tower 12.

In alternative embodiments (e.g. where the reinforcement sensing element(s) 30 are cables or wires), the method 100 may include unwinding one or more pre-tensioned cables 30 into the cementitious material 28 during the printing process of the tower structure 12. It should be understood that such cables 30 may extend along the entire height of the tower 12 or along only a portion of the tower height. In addition, in such embodiments, the additive printing device 32 is configured to print the cementitious material 28 around the pre-tensioned cables 30. In alternative embodiments, the additive printing device 32 may be configured to provide tension to the cable(s) 30 during printing of the tower structure 12. In such embodiments, the method 100 may also include varying a tension of the one or more cables 30 as a function of a cross-section of the tower structure during the printing process. Thus, such reinforcement element(s) 30 are configured to manage tensile stresses of the tower structure 12. In alternative embodiments, the additive printing device 32 is configured to eject the cementitious material 28 with short fibers or rings (e.g. metallic, polymeric, glass, or carbon fibers) as reinforcements to improve the structural strength of the tower structure 12.

Accordingly, once the tower structure 12 is printed, the reinforcement sensing element(s) 30 can be used to control a cure rate of the cementitious material 28. In another embodiment, the reinforcement sensing element(s) 30 can be subsequently used to monitor a structural health of the tower structure 12 during operation of the wind turbine 10 in response to wind loads.

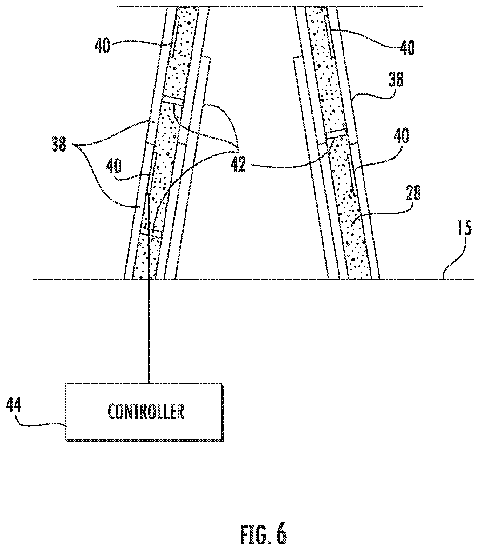

Referring now to FIG. 6, the additive printing device 32 is configured to print one or more sensors 40 through the mold(s) 38 of the tower structure 12. In such embodiments, the sensor(s) 40 are configured for monitoring the printing and/or curing processes of the cementitious material 28. In addition, as shown, the method 100 may also include printing one or more channels 42 for routing one or more signal transfer lines (not shown) of the reinforcement sensing element(s) 30 and/or the sensors 40 to a controller 44 (FIG. 5). As such, the tower structure 12 can be manufactured to include the series of tubing/channels needed to easily install the reinforcement sensing elements 30. Further, the tower structure 12 may also provide a series of openings and/or holes therein that can be regular or irregular in shape for receiving connections of the reinforcement sensing element(s) 30. In alternative embodiments, the reinforcement sensing element(s) 30 may be wireless. Thus, in such embodiments, the controller 44 may be configured to generate a digital twin of the tower structure 12 based on data collected by the reinforcement sensing element(s) 30.

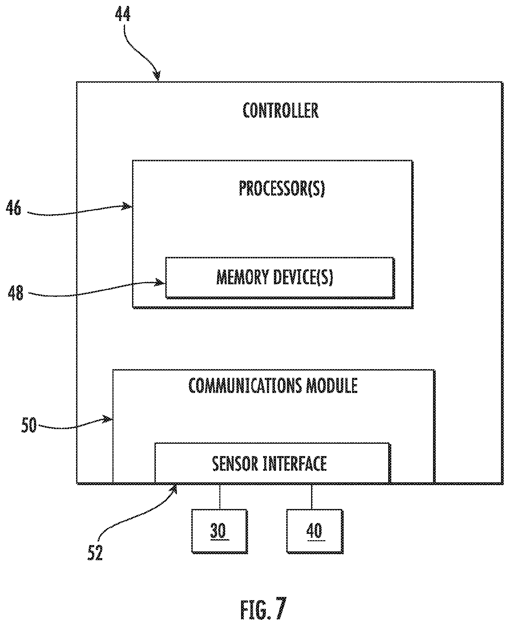

Referring now to FIG. 7, a block diagram of one embodiment of the controller 44 of the additive printing device 32 is illustrated. As shown, the controller 44 may include one or more processor(s) 46 and associated memory device(s) 48 configured to perform a variety of computer-implemented functions (e.g., performing the methods, steps, calculations and the like and storing relevant data as disclosed herein). Additionally, the controller 44 may also include a communications module 50 to facilitate communications between the controller 44 and the various components of the additive printing device 32. Further, the communications module 50 may include a sensor interface 52 (e.g., one or more analog-to-digital converters) to permit signals transmitted from one or more sensors 30, 40 to be converted into signals that can be understood and processed by the processors 46. It should be appreciated that the sensors (e.g. sensing elements 30, 40) may be communicatively coupled to the communications module 50 using any suitable means. For example, as shown in FIG. 7, the sensors 30, 40 may be coupled to the sensor interface 52 via a wired connection. However, in other embodiments, the sensors 30, 40 may be coupled to the sensor interface 52 via a wireless connection, such as by using any suitable wireless communications protocol known in the art. As such, the processor 46 may be configured to receive one or more signals from the sensors.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 46 is also configured to compute advanced control algorithms and communicate to a variety of Ethernet or serial-based protocols (Modbus, OPC, CAN, etc.). Additionally, the memory device(s) 48 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 48 may generally be configured to store suitable computer-readable instructions that, when implemented by the processor(s) 46, configure the controller 44 to perform the various functions as described herein.

This written description uses examples to disclose the invention, including the best mode, and also to enable any person skilled in the art to practice the invention, including making and using any devices or systems and performing any incorporated methods. The patentable scope of the invention is defined by claims.

## Claims

1. A method for manufacturing a tower structure (12) of a wind turbine, (10) the method comprising:
providing one or more molds (38) of the tower structure (12) on a foundation (15) of the wind turbine (10);
printing, via an additive printing device (32), the tower structure of the wind turbine (10) of a cementitious material (28) within the one or more molds;
during printing, embedding one or more reinforcement sensing elements (30) at least partially within the cementitious material (28) at one or more locations, the one or more reinforcement sensing elements (30) configured for sensing structural health of the tower structure (12), and/or sensing temperature of the cementitious material (28),
wherein embedding the one or more reinforcement sensing elements comprises printing, via the additive printing device, one or more sensors through the one or more molds of the tower structure and through the cementitious material; and,
curing the cementitious material (28) so as to form the tower structure (12).

2. The method of claim 1, further comprising printing, via the additive printing device (32), the one or more molds (38) of the tower structure (12) of a polymer material.

3. The method of claim 2, further comprising providing an adhesive material (31) between at least one of the cementitious material (28) and the foundation (15), the cementitious material (28) and the one or more reinforcement sensing element (30), and/or multiple layers of the cementitious material (28) and/or the polymer material.

4. The method of claim 1, further comprising monitoring, via the one or more sensors (40), at least one of the printing or curing of the cementitious material (28).

5. The method of claim 4, further comprising controlling a cure rate of the cementitious material (28) via the one or more reinforcement sensing elements (30).

6. The method of claims 1 - 5, wherein embedding the one or more reinforcement sensing elements (30) at least partially within the cementitious material (28) at one or more locations further comprises printing, via the additive printing device (32), the one or more reinforcement sensing elements (30) within the cementitious material (28) at the one or more locations during printing of the tower structure (12).

7. The method of claims 1- 6, wherein the one or more reinforcement sensing elements (30) comprise at least one of strain gauges, temperatures sensors, elongated cables or wires, helical cables or wires, reinforcing bars, reinforcing fibers, reinforcing metallic rings couplings, and/or mesh.

8. The method of claim 7, further comprising at least one of unwinding one or more pre-tensioned cables into the cementitious material (28) during printing of the tower structure (12) or tensioning, via the additive printing device (32), the one or more cables during printing of the tower structure (12).

9. The method of claim 8, further comprising varying a tension of the one or more cables as a function of a cross-section of the tower structure (12) during printing of the tower structure (12).

10. The method of any of the preceding claims, further comprising printing one or more channels (42) for routing one or more signal transfer lines of the one or more reinforcement sensing elements (30) to a controller (44).

11. The method of claim 10, further comprising generating, via the controller (44), a digital twin of the tower structure (12) based on data collected by the one or more reinforcement sensing elements (30).

12. The method according to claim 1, the method further comprising:
providing one or more molds (38) of the tower structure (12) on a foundation (15) of the wind turbine (10);
filling the one or more molds (38) with a cementitious material (28);
during filling, embedding the one or more reinforcement sensing elements (30) at least partially within the cementitious material (28) at one or more locations; and,
curing the cementitious material (28) within the one or more molds (38) so as to form the tower structure (12).

13. The method of claim 12, wherein filling the one or more molds (38) with a cementitious material (28) so as to form the tower structure (12) further comprises printing, via an additive printing device (32), the cementitious material (28) into the one or more molds (38) of the tower structure, wherein printing the cementitious material (28) into the one or more molds (38) of the tower structure further comprises building up the cementitious material (28) of the tower structure (12) in multiple passes via the additive printing device (32).

## Patentansprüche

1. Verfahren zur Herstellung einer Turmstruktur (12) einer Windkraftanlage (10), wobei das Verfahren umfasst:
Bereitstellen einer oder mehrerer Formen (38) der Turmstruktur (12) auf einem Fundament (15) der Windkraftanlage (10);
Drucken der Turmstruktur der Windkraftanlage (10) aus einem zementartigen Material (28) mittels einer additiven Druckvorrichtung (32) innerhalb der einen oder mehreren Formen;
während des Druckens Einbetten eines oder mehrerer Verstärkungsdetektionselemente (30) zumindest teilweise in das zementartige Material (28) an einer oder mehreren Stellen, wobei das eine oder die mehreren Verstärkungsdetektionselemente (30) zum Erfassen des strukturellen Zustands der Turmstruktur (12) und/oder zum Erfassen der Temperatur des zementartigen Materials (28) konfiguriert sind,
wobei das Einbetten des einen oder der mehreren Verstärkungsdetektionselemente das Drucken eines oder mehrerer Sensoren durch die eine oder die mehreren Formen der Turmstruktur und durch das zementartige Material mittels der additiven Druckvorrichtung umfasst; und
Aushärten des zementartigen Materials (28), um die Turmstruktur (12) zu bilden.

2. Verfahren nach Anspruch 1, das ferner das Drucken der einen oder mehreren Formen (38) der Turmstruktur (12) aus einem Polymermaterial mittels der additiven Druckvorrichtung (32) umfasst.

3. Verfahren nach Anspruch 2, das ferner umfasst: Bereitstellen eines Klebematerials (31) zwischen mindestens einem der zementartigen Materialien (28) und dem Fundament (15), dem zementartigen Material (28) und dem einen oder den mehreren Verstärkungsdetektionselemente (30) und/oder mehreren Schichten des zementartigen Materials (28) und/oder des Polymermaterials.

4. Verfahren nach Anspruch 1, ferner umfassend Überwachen des Druckens oder Aushärtens des zementartigen Materials (28) über den einen oder die mehreren Sensoren (40).

5. Verfahren nach Anspruch 4, ferner umfassend Steuern einer Aushärtungsrate des zementartigen Materials (28) über das eine oder die mehreren Verstärkungsdetektionselemente (30).

6. Verfahren nach einem der Ansprüche 1 bis 5, wobei das Einbetten des einen oder der mehreren Verstärkungsdetektionselemente (30) zumindest teilweise in das zementartige Material (28) an einer oder mehreren Stellen ferner das Drucken des einen oder der mehreren Verstärkungsdetektionselemente (30) in das zementartige Material (28) an der einen oder den mehreren Stellen während des Druckens der Turmstruktur (12) mittels der additiven Druckvorrichtung (32) umfasst.

7. Verfahren nach einem der Ansprüche 1 bis 6, wobei das eine oder die mehreren Verstärkungsdetektionselemente (30) mindestens eines vom Folgendem umfassen: Dehnungsmessstreifen, Temperatursensoren, längliche Kabel oder Drähte, spiralförmige Kabel oder Drähte, Verstärkungsstäbe, Verstärkungsfasern, metallische ringförmige Verstärkungskupplungen und/oder ein Netz.

8. Verfahren nach Anspruch 7, ferner umfassend mindestens eines von Abwickeln eines oder mehrerer vorgespannter Kabel in das zementartige Material (28) während des Druckens der Turmstruktur (12) oder Spannen des einen oder der mehreren Kabel über die additive Druckvorrichtung (32) während des Druckens der Turmstruktur (12).

9. Verfahren nach Anspruch 8, ferner umfassend Variieren der Spannung des einen oder der mehreren Kabel als eine Funktion von einem Querschnitt der Turmstruktur (12) während des Druckens der Turmstruktur (12).

10. Verfahren nach einem der vorstehenden Ansprüche, ferner umfassend Drucken eines oder mehrerer Kanäle (42) zum Verlegen einer oder mehrerer Signalübertragungsleitungen der einen oder mehreren Verstärkungsdetektionselemente (30) zu einer Steuereinheit (44).

11. Verfahren nach Anspruch 10, ferner umfassend Erzeugen eines digitalen Zwillings der Turmstruktur (12) über die Steuerung (44) auf der Grundlage von Daten, die von dem einen oder den mehreren Verstärkungsdetektionselemente (30) gesammelt wurden.

12. Verfahren nach Anspruch 1, wobei das Verfahren ferner umfasst:
Bereitstellen einer oder mehrerer Formen (38) der Turmstruktur (12) auf einem Fundament (15) der Windkraftanlage (10);
Füllen der einen oder mehreren Formen (38) mit einem zementartigen Material (28);
während des Füllens Einbetten des einen oder der mehreren Verstärkungsdetektionselemente (30) zumindest teilweise in das zementartige Material (28) an einer oder mehreren Stellen; und,
Aushärten des zementartigen Materials (28) in der einen oder den mehreren Formen (38), um die Turmstruktur (12) zu bilden.

13. Verfahren nach Anspruch 12, wobei das Füllen der einen oder mehreren Formen (38) mit einem zementartigen Material (28) zur Bildung der Turmstruktur (12) ferner das Drucken des zementartigen Materials (28) in die eine oder mehreren Formen (38) der Turmstruktur mittels einer additiven Druckvorrichtung (32) umfasst, wobei das Drucken des zementartigen Materials (28) in die eine oder mehreren Formen (38) der Turmstruktur ferner das Aufbauen des zementartigen Materials (28) der Turmstruktur (12) in mehreren Durchgängen über die additive Druckvorrichtung (32) umfasst.

## Revendications

1. Procédé permettant de fabriquer une structure de mât (12) d'une éolienne (10), le procédé comprenant :
la fourniture d'un ou de plusieurs moules (38) de la structure de mât (12) sur une fondation (15) de l'éolienne (10) ;
l'impression, par l'intermédiaire d'un dispositif d'impression additive (32), de la structure de mât (12) de l'éolienne (10) d'un matériau cimentaire (28) dans le ou les moules ;
pendant l'impression, l'intégration d'un ou plusieurs éléments de détection de renforcement (30) au moins partiellement dans le matériau cimentaire (28) au niveau d'un ou plusieurs emplacements, le ou les éléments de détection de renforcement (30) configurés pour détecter une santé structurelle de la structure de mât (12), et/ou détecter une température du matériau cimentaire (28), dans lequel l'intégration du ou des éléments de détection de renforcement comprend l'impression, par l'intermédiaire du dispositif d'impression additive, d'un ou plusieurs capteurs à travers le ou les moules de la structure de mât et à travers le matériau cimentaire ; et,
le durcissement du matériau cimentaire (28) de manière à former la structure de mât (12).

2. Procédé selon la revendication 1, comprenant en outre l'impression, par l'intermédiaire du dispositif d'impression additive (32), du ou des moules (38) de la structure de mât (12) d'un matériau polymère.

3. Procédé selon la revendication 2, comprenant en outre la fourniture d'un matériau adhésif (31) entre au moins l'un parmi le matériau cimentaire (28) et la fondation (15), le matériau cimentaire (28) et le ou les éléments de détection de renforcement (30), et/ou des couches multiples du matériau cimentaire (28) et/ou du matériau polymère.

4. Procédé selon la revendication 1, comprenant en outre la surveillance, par l'intermédiaire du ou des capteurs (40), d'au moins l'un parmi l'impression ou le durcissement du matériau cimentaire (28).

5. Procédé selon la revendication 4, comprenant en outre la commande d'une vitesse de durcissement du matériau cimentaire (28) par l'intermédiaire du ou des éléments de détection de renforcement (30).

6. Procédé selon la revendication 5, dans lequel l'intégration du ou des éléments de détection de renforcement (30) au moins partiellement dans le matériau cimentaire (28) au niveau d'un ou plusieurs emplacements comprend en outre l'impression, par l'intermédiaire du dispositif d'impression additive (32), du ou des éléments de détection de renforcement (30) dans le matériau cimentaire (28) à niveau du ou des emplacements pendant l'impression de la structure de mât (12).

7. Procédé selon la revendication 6, dans lequel le ou les éléments de détection de renforcement (30) comprennent au moins l'un parmi des jauges de contrainte, des capteurs de température, des fils ou des câbles allongés, des fils ou des câbles hélicoïdaux, des barres de renforcement, des fibres de renforcement, des accouplements annulaires métalliques de renforcement et/ou un maillage.

8. Procédé selon la revendication 7, comprenant en outre au moins l'un parmi le déroulement d'un ou plusieurs câbles de pré-contraints dans le matériau cimentaire (28) pendant l'impression de la structure de mât (12) ou la contrainte, par l'intermédiaire du dispositif d'impression additive (32), du ou des câbles pendant l'impression de la structure de mât (12).

9. Procédé selon la revendication 8, comprenant en outre la variation d'une contrainte du ou des câbles en fonction d'une section transversale de la structure de mât (12) pendant l'impression de la structure de mât (12).

10. Procédé selon l'une quelconque des revendications précédentes, comprenant en outre l'impression d'un ou plusieurs canaux (42) pour acheminer une ou plusieurs lignes de transfert de signaux du ou des éléments de détection de renforcement (30) vers un dispositif de commande (44).

11. Procédé selon la revendication 10, comprenant en outre la génération, par l'intermédiaire du dispositif de commande (44), d'un jumeau numérique de la structure de mât (12) sur la base de données collectées par le ou les éléments de détection de renforcement (30).

12. Procédé selon la revendication 1, le procédé comprenant en outre : la fourniture d'un ou de plusieurs moules (38) de la structure de mât (12) sur une fondation (15) de l'éolienne (10) ;
le remplissage du ou des moules (38) d'un matériau cimentaire (28) ;
pendant l'impression, l'intégration du ou des éléments de détection de renforcement (30) au moins partiellement dans le matériau cimentaire au niveau d'un ou plusieurs emplacements ; et,
le durcissement du matériau cimentaire (28) dans le ou les moules (38) de manière à former la structure de mât (12).

13. Procédé selon la revendication 12, dans lequel le remplissage du ou des moules (38) d'un matériau cimentaire (28) de manière à former la structure de mât (12) comprend en outre l'impression, par l'intermédiaire d'un dispositif d'impression additive (32), du matériau cimentaire (28) dans le ou les moules (38) de la structure de mât, dans lequel l'impression du matériau cimentaire (28) dans le ou les moules (38) de la structure de mât comprend en outre la construction du matériau cimentaire (28) de la structure de mât (12) dans de multiples passages par l'intermédiaire du dispositif d'impression additive (32).
